# EUROPÄISCHE PATENTSCHRIFT

(11) **EP 2 715 886 B1**
(45) Veröffentlichungstag und Bekanntmachung des Hinweises auf die Patenterteilung: **02.08.2017**
(21) Anmeldenummer: 12724967.0
(22) Anmeldetag: 29.05.2012
(51) Int. Cl.: H01S 3/036, H01S 3/041, F28F 21/08, F28F 1/24, F28D 7/16, H01S 3/083, H01S 3/0971, H01S 3/223, F28F 19/06

(54) **GASLASER MIT EINEM WÄRMETAUSCHER**
GAS LASER HAVING A HEAT EXCHANGER
LASER À GAZ DOTÉ D'UN ÉCHANGEUR THERMIQUE

(30) Priorität: 01.06.2011 DE 102011076871
(43) Veröffentlichungstag der Anmeldung: 09.04.2014
(73) Patentinhaber: TRUMPF Laser-und Systemtechnik GmbH, 71254 Ditzingen (DE)
(72) Erfinder: GESCHWANDNER, Mark, 70825 Korntal-Münchingen (DE); BREISACHER, Matthias, 71254 Ditzingen (DE)
(74) Vertreter: Kohler Schmid Möbus Patentanwälte
(86) Internationale Anmeldenummer: PCT/EP2012/060027
(87) Internationale Veröffentlichungsnummer: WO 2012/163909

(56) Entgegenhaltungen:
- EP-A1- 0 622 601
- JP-A- 8 306 989
- JP-A- 2006 153 398
- US-A- 4 760 581

## Beschreibung

Die vorliegende Erfindung betrifft einen Gaslaser mit einem Gebläse zur Erzeugung eines Gasstroms eines Lasergases sowie mit mindestens einen Wärmetauscher mit einer Mehrzahl von Wärmetauscherrohren.

Aus der JP 2001-284686 ist ein Wärmetauscher für einen Gaslaser bekannt geworden, der in eine beliebige Form gebracht werden kann. Der Wärmetauscher weist eine Mehrzahl von Wärmetauscherrohren auf, welche Kühlrippen umfassen, die durch Aufwalzen auf ein Wärmestrahlungsrohr hergestellt werden, in das ein Innenrohr eingeführt ist. Eine Vielzahl solcher Wärmetauscherrohre wird miteinander verbunden und bildet einen Wärmetauscher, welcher zur Kühlung eines Lasergases dient.

Aus der DE 10 2008 013 816 B4 ist ein Gaslaser bekannt geworden, welcher Wärmetauscher mit einer helixförmigen Kühlschlange aufweist, die in einem Absauggehäuse bzw. einem Zuführungsgehäuse zur Ab- bzw. Zuleitung des Lasergases zu einem Radialgebläse angeordnet sind. Die Effizienz (Kühlleistung pro cm³) der helixförmigen Kühlschlangen ist jedoch vergleichsweise gering. Auch können die Kühlschlangen ggf. zu ungewollten Fluktuationen bzw. Drucksprüngen des zu kühlenden Lasergases führen.

Aus der US 4 760 581 A1 ist ein Gaslaser mit einem Wärmetauscher mit Endplatten bekannt. Aus der EP 0 622 601 A1 ist eine Wärmetauscher mit parallelen Wärmetauscherrohren und 2 Endplatten bekannt.

### Aufgabe der Erfindung

Es ist eine Aufgabe der vorliegenden Erfindung, einen Gaslaser mit einem Wärmetauscher in einer kompakten Bauform und mit effizientem Wärmeaustausch auszustatten.

### Gegenstand der Erfindung

Die Aufgabe der vorliegenden Erfindung wird erfüllt durch einen Gaslaser wie in Anspruch 1 definiert. Vorteilhafte Ausführungsformen finden sich in den abhängigen Ansprüchen.

Diese Aufgabe wird erfindungsgemäß gelöst durch einen Gaslaser der eingangs genannten Art, bei dem der Wärmetauscher zwei Endplatten aufweist, an denen die Wärmetauscherrohre mit ihren gegenüberliegenden Enden (fluiddicht) befestigt sind, wobei in den Endplatten Öffnungen zur Zufuhr eines Wärmetauscherfluids zu den Wärmetauscherrohren gebildet sind und bei dem die Wärmetauscherrohre im Wesentlichen quer zur Strömungsrichtung des Gasstroms des Lasergases verlaufen. Durch die Fixierung der Wärmetauscherrohre an den beiden Endplatten kann der Wärmetauscher in einer kompakten Bauform realisiert werden, wobei die Endplatten zusätzlich eine hohe Stabilität gewährleisten. Die Verteilung bzw. die Versorgung der Wärmetauscherrohre mit einem Wärmetauscherfluid, bei den hier vorliegenden Anwendungen in der Regel Wasser, kann hierbei über die in den Endplatten gebildeten Öffnungen erfolgen. Ein solcher kassettenförmiger Wärmetauscher kann in ein entsprechendes Gehäuse des Gaslasers auf einfache Weise eingebaut und ebenso ausgetauscht werden, sofern an dem Wärmetauscher Modifikationen vorgenommen werden müssen. Die Endplatten können hierbei aus Metall, beispielsweise aus rostfreiem Stahl, gefertigt sein.

Der Wärmetauscher ist hierbei bezüglich der Strömungsrichtung des Gasstroms des Lasergases derart ausgerichtet, dass die Wärmetauscherrohre im Wesentlichen quer zur Strömungsrichtung des Gasstroms verlaufen. Bei dem Gebläse kann es sich um ein Radialgebläse handeln, welches an zentraler Stelle angeordnet ist und von dem eine Mehrzahl von Zuleitungen sowie von Ableitungen in den Bereich des in diesem Fall typischer Weise quadratisch gefalteten Laserresonators führen.

In den Endplatten sind Kanäle zur Verbindung von mindestens zwei Öffnungen gebildet, die unterschiedlichen Wärmetauscherrohren zugeordnet sind. Durch die Kanäle in den Endplatten können mehrere Wärmetauscherrohre miteinander verbunden werden und auf diese Weise die Verteilung des Wärmetauscherfluids geeignet beeinflusst werden. Der Strömungsweg des Wärmetauscherfluids kann hierbei so gewählt werden, dass lediglich ein einziger Zufluss sowie ein einziger Abfluss für das Wärmetauscherfluid in dem Wärmetauscher werden muss. Alternativ ist es auch möglich, die Verteilung des Wärmetauscherfluids derart vorzunehmen, dass mehrere getrennte Wärmetauscherkreise in dem Wärmetauscher entstehen, indem mehrere fluiddicht getrennte Gruppen von Wärmetauscherrohren jeweils mit einem eigenen Zu- und Abfluss versehen werden.

Die Kanäle können hierbei durch ein materialabtragendes Verfahren, z.B. durch Ausfräsen, an den Endplatten, welche beispielsweise einstückig ausgeführt sein können, ausgebildet sein. Alternativ können auch andere (umformende) Verfahren, z.B. das so genannte Hydroforming, zur Ausbildung der Kanäle verwendet werden. Alternativ ist es auch möglich, Endplatten zu verwenden, welche mehrere übereinander angebrachte Schichten aufweisen, wobei die Kanäle als Aussparungen in einer oder mehrerer der Schichten ausgebildet sind. Wie weiter oben dargestellt sind die Kanäle sowie deren Verbindung zu den Wärmetauscherrohren in ihrer Anordnung beliebig konfigurierbar und erlauben damit einen mehrstufigen Betrieb, d.h. mehrere getrennte Wärmekreisläufe, die auch gleichzeitig betrieben werden können. Dabei wird die abzuführende Wärme des Lasergases in verschiedene, typischer Weise geometrisch direkt aufeinander folgende Wasserkreisläufe, bspw. einen Heiß- und einen Kaltwasserkreis, aufgeteilt. Dieser modulare Aufbau ermöglicht eine hohe Flexibilität, welche es ermöglicht, bei geänderten Anforderungen bzw. Umgebungsbedingungen innerhalb kurzer Zeit unterschiedliche Variantenkonstruktionen zu realisieren. Es ist mindestens ein Kanal zur Verbindung von genau zwei (typischer Weise benachbarten) Wärmetauscherrohren ausgebildet. Durch die Verwendung solcher Kanäle kann eine serielle Verbindung zwischen einer Mehrzahl von Wärmetauscherrohren hergestellt werden, wobei das Wärmetauscherfluid in einem ersten Wärmetauscherrohr von der ersten Endplatte zur zweiten Endplatte und in einem zweiten, über den Kanal mit dem ersten verbundenen Wärmetauscherrohr von der zweiten Endplatte zur ersten Endplatte zurück strömt. Die Endplatten weisen Abdeckungen zum fluiddichten Verschließen der Kanäle auf. Sind die Endplatten sowie die Abdeckungen aus einem metallischen Material gebildet, z.B. aus rostfreiem Stahl, kann das fluiddichte Verschließen der Kanäle z.B. durch Verschweißen erfolgen.

In einer Ausführungsform sind die Wärmetauscherrohre parallel zueinander ausgerichtet und verlaufen typischer Weise im Wesentlichen senkrecht zu einer (Haupt-)strömungsrichtung des Lasergases. Auf diese Weise lässt sich die Effizienz der Wärmeübertragung zwischen dem Lasergas und dem Wärmetauscherfluid erhöhen.

In einer Ausführungsform sind die Wärmetauscherrohre in einer matrixförmigen Anordnung, d.h. in einer Mehrzahl von Reihen und Spalten, angeordnet. Durch die regelmäßige Anordnung können Druckspitzen bzw. Fluktuationen des Lasergases gering gehalten werden. Die Anzahl von Reihen der Wärmetauscherrohre, die in dem Wärmetauscher verwendet wird, liegt typischer Weise bei acht oder mehr, die Zahl der Wärmetauscherrohre in einer Reihe liegt in der Regel bei ca. drei oder mehr, um auch bei einem vergleichsweise niedrigen Druck des Lasergases (z.B. ca. 150 hPa) einen ausreichend großen Wärmeaustausch zu gewährleisten.

In einer Weiterbildung dieser Ausführungsform sind die Wärmetauscherrohre benachbarter Reihen versetzt zueinander angeordnet. Diese Anordnung kann bei einer im Wesentlichen senkrecht zu den Wärmetauscherrohren verlaufenden Strömungsrichtung des Lasergases zur Ausbildung einer turbulenten Gasströmung führen, welche die Effizienz der Wärmeübertragung deutlich erhöht, ohne dass hierbei die Druckverluste des Lasergases zu groß werden. Eine solche Anordnung stellt somit einen optimalen Kompromiss zwischen der Effizienz der Wärmeübertragung und den Druckverlusten des Lasergases dar. Insbesondere kann bei einer solchen Anordnung auch bei einem geringen Druck des Lasergases von z.B. ca. 150 hPa ein hoher Wärmeaustausch erreicht werden.

Die Wärmetauscherrohre weisen vorteilhafter Weise ein Innenrohr sowie eine Mehrzahl von (Kühl-)Rippen auf. In dem Innenrohr wird das Wärmetauscherfluid geführt. Die (Kühl-)rippen können an dem Innenrohr beispielsweise durch Aufwalzen ausgebildet sein, d.h. das Innenrohr ist von einem Außenrohr umgeben, an dem die Kühlrippen gebildet sind. Beim Aufwalzen wird hierbei über das Innenrohr ein Außenrohr geschoben, welches noch nicht mit Rippen versehen ist. Durch ineinander laufende Schneidwalzen werden aus dem glatten Außenrohr die Kühlrippen geschnitten bzw. geformt. Die sehr hohen Umformkräfte beim Walzen der Rohre sorgen für einen sehr festen Sitz und damit sehr guten Wärmeübergang der beiden Materialien.

Es hat sich als günstig erwiesen, wenn das Innenrohr und die Kühlrippen bzw. das Außenrohr aus unterschiedlichen (metallischen) Materialien hergestellt sind, d.h. wenn es sich bei dem Wärmetauscherrohr um ein Bimetallrohr handelt. Hierbei kann das Innenrohr beispielsweise aus rostfreiem Stahl gebildet sein, um eine Korrosion des Innenrohrs durch das darin geführte Wärmetauscherfluid zu verhindern. Die Kühlrippen bzw. das Außenrohr können hingegen aus einem anderen metallischen Material, z.B. aus Aluminum, hergestellt werden, welches sich durch eine hohe Wärmeleitfähigkeit auszeichnet. Da das Material der Kühlrippen nicht mit dem Wärmetauscherfluid in Berührung kommt, ist es nicht erforderlich, dass dieses eine hohe Korrosionsbeständigkeit aufweist.

In einer weiteren Ausführungsform umfasst der Wärmetauscher mindestens zwei Anschlussstutzen oder Öffnungen zur Zu- bzw. zur Abführung eines Wärmetauscherfluids. Der modulare Wärmetauscher ermöglicht es, alle Wärmetauscherrohre in einem einzigen Wärmetauscherkreislauf zu verwenden oder alternativ mehrere Gruppen von Wärmetauscherrohren zu bilden, welche jeweils unterschiedlichen Wärmetauscherkreisläufen zugeordnet sind. Für jeden dieser Kreisläufe kann an dem Wärmetauscher, genauer gesagt an den Endplatten, ein eigenes Paar von Anschussstutzen vorgesehen sein. Es versteht sich, dass gegebenenfalls die Abdeckungen der Kanäle mit einem Anschluss zur Zu- bzw. zur Abführung des Wärmetauscherfluids ausgestattet sein können, um die Flexibilität bei der Verwendung des Wärmetauschers zu erhöhen. Alternativ kann der Zu- bzw. Abfluss an einer Endplatte auch unmittelbar mit der Öffnung eines Wärmetauscherrohres in Verbindung stehen.

Bei einer Ausführungsform umfasst der Gaslaser zusätzlich ein Gehäuse zur Aufnahme des Wärmetauschers. Bei dem Gehäuse kann es sich z.B. um ein Zuleitungsgehäuse bzw. ein Ableitungsgehäuse für das Lasergas zu bzw. vom Laserresonator handeln. Der kassettenförmige Wärmetauscher kann in ein solches Gehäuse eingeschoben werden, welches zu diesem Zweck eine Ausnehmung bzw. eine Öffnung aufweist. Die Öffnung kann durchgehend ausgebildet sein, so dass die Endplatten die Seitenflächen des Gehäuses bilden.

Der in dem Gehäuse aufgenommene kassettenförmige Wärmetauscher ist mit dem Gehäuse gasdicht, genauer gesagt vakuumdicht verbunden, um die Strömungsführung des Lasergases zu kapseln. Insbesondere sollten alle Schnittstellen des Gehäuses mit dem darin aufgenommenem Wärmetauscher Helium- bzw. Vakuum-dicht ausgeführt werden, d.h. die Abdichtung an Schnittstellen zwischen dem Lasergas und der Umgebungsluft (z.B. zwischen dem kassettenförmigen Wärmetauscher-Einsatz und dem Gehäuse) sollte auch bei vergleichsweise geringem Druck des Lasergases von z.B. ca. 150 hPa eine Leckrate von weniger als 1 x 10⁻⁸ mbar liter/s aufweisen. Auch die Abdichtung an Schnittstellen zwischen dem Lasergas und dem Kühlwasser am Wärmetauscher sollte bei hohen Drücken der Kühlflüssigkeit von bis zu 10 bar eine Leckrate von weniger als 1 x 10⁻¹² mbar liter/s aufweisen.

Eine der Endplatten kann hierbei randseitig über die Öffnung überstehen, um den in das Gehäuse eingeschobenen Wärmetauscher an einem umlaufenden Gehäuserand zu fixieren, d.h. diese Endplatte weist eine größere Oberfläche auf als die zweite Endplatte, welche in die Öffnung eingeschoben wird. Die größere Endplatte wird an dem umlaufenden Gehäuserand gas- bzw. vakuumdicht fixiert und fungiert gleichzeitig als Dichtung, um einen kompakten Aufbau zu realisieren. Eine vakuumdichte Verbindung kann z.B. durch Verschrauben der Endplatte mit dem Gehäuserand sichergestellt werden. Zwischen dem Gehäuserand und der Endplatte kann insbesondere eine umlaufende Dichtung angebracht werden, wobei die umlaufende Dichtung bevorzugt weiter innen liegt als die Befestigungsstellen bei der Verschraubung. Insbesondere kann an dem Gehäuserand (oder an der Endplatte) eine (umlaufende) Vertiefung zur Aufnahme der Dichtung (z.B. in Form eines O-Rings) vorgesehen sein. Um die Dichtwirkung zu erzeugen, kann die Dichtung beim Verschrauben zwischen der Endplatte und dem Gehäuserand geklemmt werden. Alternativ können die Endplatten symmetrisch aufgebaut sein, d.h. die Oberflächen der Endplatten können gleich groß sein.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Draufsicht auf einen CO₂-Gaslaser mit einem gefalteten Laserresonator in einer Schnittdarstellung,
- Fig. 2: eine perspektivische Darstellung des CO₂-Gaslasers von Fig. 1,
- Fig. 3: eine perspektivische Darstellung einer Wärmetauscher-Kassette für den Gaslaser von Fig. 1 und Fig. 2,
- Fig. 4: eine schematische Darstellung der Wärmetauscher-Kassette von Fig. 3 sowie eines zugehörigen Gehäuses, und
- Fig. 5: eine schematische Schnittdarstellung eines Wärmetauscherrohres.

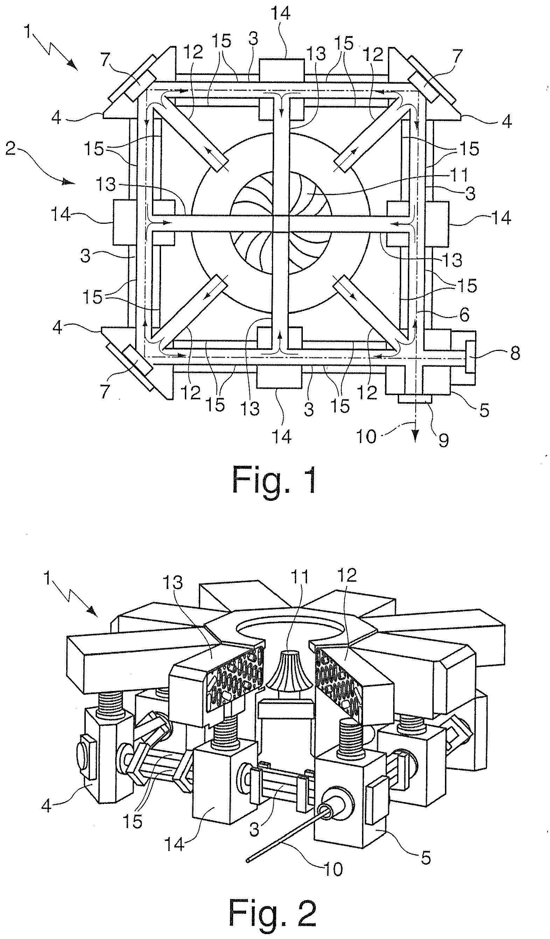

Der in Fig. 1 und in Fig. 2 gezeigte CO₂-Gaslaser 1 weist einen quadratisch gefalteten Laserresonator 2 mit vier sich aneinander anschließenden Laserentladungsrohren 3 auf, die über Eckgehäuse 4, 5 miteinander verbunden sind. Ein in Richtung der Achsen der Laserentladungsrohre 3 verlaufender Laserstrahl 6 ist strichpunktiert dargestellt. Umlenkspiegel 7 in den Eckgehäusen 4 dienen der Umlenkung des Laserstrahls 6 um jeweils 90°. In einem der Eckgehäuse 5 sind ein Rückspiegel 8 und ein teiltransmissiver Auskoppelspiegel 9 angeordnet. Der Rückspiegel 8 ist hochreflektierend ausgebildet und reflektiert den Laserstrahl 6 um 180°, so dass die Laserentladungsrohre 3 in entgegen gesetzter Richtung erneut durchlaufen werden.

Ein Teil des Laserstrahles 6 wird an dem teiltransmissiven Auskoppelspiegel 9 aus dem Laserresonator 2 ausgekoppelt, der andere Teil verbleibt im Laserresonator 2 und durchläuft die Laserentladungsrohre 3 erneut. Der über den Auskoppelspiegel 9 aus dem Laserresonator 2 ausgekoppelte Laserstrahl ist in Fig. 1 mit 10 bezeichnet.

Im Zentrum des gefalteten Laserresonators 2 ist als Druckquelle für Lasergas ein Radialgebläse 11 angeordnet, das über Zufuhrgehäuse 12 für Lasergas mit den Eckgehäusen 4, 5 in Verbindung steht. Mittig zwischen den Eckgehäusen 4, 5 sind weitere Gehäuse 14 des Laserresonators 2 angeordnet, welche mit Absauggehäusen 13 in Verbindung stehen, die der Absaugung des Lasergases aus dem Laserresonator 2 und der Rückführung zum Radialgebläse 11 dienen. Die Strömungsrichtung des Lasergases im Innern der Laserentladungsrohre 3 sowie in den Zufuhr- und Absauggehäusen 12, 13 ist in Fig. 1 durch Pfeile veranschaulicht.

Die Anregung des Lasergases erfolgt über Elektroden 15, die benachbart zu den Laserentladungsrohren 3 angeordnet und mit einem (nicht gezeigten) HF-Generator verbunden sind. Als HF-Generator kann beispielsweise ein Röhrengenerator mit einer Anregungsfrequenz von 13,56 MHz oder 27,12 MHz verwendet werden.

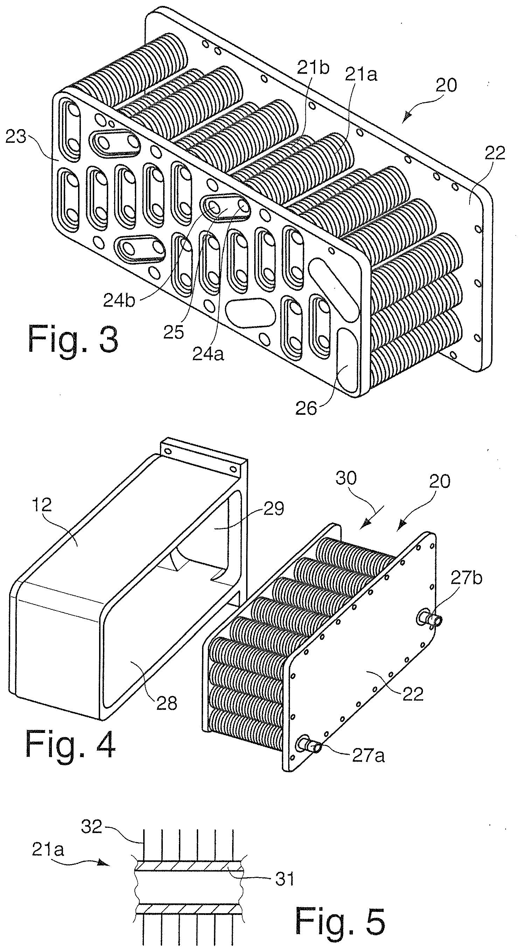

Wie in Fig. 2 zu erkennen ist, ist sowohl in die Zufuhrgehäuse 12 als auch in die Absauggehäuse 13 des Gaslasers 1 jeweils ein kassettenförmiger Wärmetauscher 20 eingebracht, der in Fig. 3 im Detail dargestellt ist. Der Wärmetauscher 20 weist eine Mehrzahl von Wärmetauscherrohren 21 a, 21 b auf, welche zwischen zwei rechteckigen Endplatten 22, 23 angeordnet und im vorliegenden Beispiel an ihren gegenüberliegenden Enden mit den Endplatten 22, 23 verschweißt sind. In den Endplatten 22, 23 sind Öffnungen 24a, 24b ausgebildet, die es ermöglichen, ein Wärmetauscherfluid in das Innere eines jeweiligen Wärmetauscherrohrs 21 a, 21 b einzuleiten, wobei im vorliegenden Beispiel Wasser als Wärmetauscherfluid verwendet wird.

In Fig. 3 ebenfalls zu erkennen sind Kühlkanäle 25, welche im dort gezeigten Beispiel jeweils zwei benachbarte Wärmetauscherrohre 21 a, 21 b miteinander verbinden, um auf diese Weise eine serielle Durchströmung aller Wärmetauscherrohre 21 a, 21 b des Wärmetauschers zu ermöglichen. Die Kanäle 25 werden durch jeweilige plattenförmige Abdeckungen 26 fluiddicht gegen die Umgebung abgedichtet. Im vorliegenden Beispiel bestehen die Endplatten 22, 23 aus rostfreiem Stahl (V4A-Stahl, 1.4571) und auch die Abdeckungen 26 sind aus diesem Material gefertigt, so dass die fluiddichte Abdichtung der Kanäle 25 durch Verschweißen erfolgen kann. Es versteht sich, dass in Fig. 2 und Fig. 3 lediglich eine geringe Anzahl von Abdeckungen 26 gezeigt ist, um die darunter liegenden Kanäle 25 nicht zu verdecken, dass aber beim Betrieb des Wärmetauschers 20 typischer Weise alle Kanäle 25 durch Abdeckungen 26 verschlossen sind.

Bei dem in Fig. 3 gezeigten Beispiel sind die Kühlkanäle 25 als Ausnehmungen in die Endplatten 22, 23 gefräst, es versteht sich aber, dass die Kühlkanäle 25 auch auf andere Weise, beispielsweise durch Hydroforming, erzeugt werden können. Auch ist es möglich, die Endplatten 22, 23 nicht wie in Fig. 3 gezeigt einstückig, sondern in mehreren Schichten aufzubauen, wobei die Kanäle als Ausnehmungen in einzelnen Schichten ausgebildet sind.

Durch die Kühlkanäle 25 kann die Verteilung des Kühlmediums (hier: Wasser) innerhalb der Endplatten 22, 23 erfolgen, so dass der Wärmetauscher 20 in kompakter Bauweise hergestellt werden kann. Im vorliegenden Beispiel dient ein erster Anschlussstutzen 27a (vgl. Fig. 4) an der ersten Endplatte 22 zur Zuführung von Wasser zu dem Wärmetauscher 20, ein zweiter Anschlussstutzen 27b dient der Abführung des beim Wärmeaustausch mit dem Lasergas erhitzten Wassers vom Wärmetauscher 20. Die Anschlussstutzen 27a, 27b sind hierbei jeweils unmittelbar mit einer jeweiligen Öffnung eines Wärmetauscherrohres verbunden, es versteht sich aber, dass diese auch in einer Abdeckung 26 der Endplatte 22 angebracht werden können, die an der Endplatte 22 in Fig. 4 zur Vereinfachung nicht dargestellt sind. Letzteres ist insbesondere dann von Vorteil, wenn eine Mehrzahl von Rippenrohren, beispielsweise ganze Reihen von Rippenrohren, parallel mit dem Kühlmedium versorgt werden sollen.

Bei dem in Fig. 3 und Fig. 4 gezeigten Beispiel werden alle Wärmetauscherrohre 21 a, 21 b ausgehend vom ersten Anschlussstutzen 27a nacheinander (seriell) durchlaufen. Es versteht sich, dass alternativ auch weitere Paare von Anschlussstutzen an dem Wärmetauscher 20 vorgesehen werden können, um mehrere unabhängige Wärmekreisläufe, z.B. einen Heizkreislauf und einen unabhängigen Kühlkreislauf, zu bilden. Hierzu können die Abdeckungen 26 geeignet modifiziert werden, d.h. die Abdeckungen 26 können mit Anschlussstutzen versehen werden bzw. einzelne Abdeckungen 26 können so ausgebildet werden, dass diese die zu einem Kanal 25 gehörigen Öffnungen und somit die Verbindung von zu unterschiedlichen Wärmekreisläufen gehörenden Wärmetauscherrohren 21 a, 21 b trennen.

In Fig. 4 wird der Wärmetauscher 20 in ein Zufuhrgehäuse 12 (vgl. Fig. 2) eingesetzt. Es versteht sich, dass der Wärmetauscher 20 ebenfalls in ein Absauggehäuse 13 eingesetzt werden kann, da beide Gehäuse 12, 13 von (im Wesentlichen) identischer Bauart sind. Das Zufuhrgehäuse 12 weist hierbei eine durchgehende Öffnung 28 auf, um den Wärmetauscher 20 seitlich in das Gehäuse 12 einschieben zu können. Eine erste Endplatte 22 ist hierbei größer als die durchgehende Öffnung 28 ausgebildet, so dass der in das Gehäuse 12 eingesetzte bzw. versenkte Wärmetauscher 20 am umlaufenden Rand der Endplatte 22 an dem Gehäuse 12 fixiert werden kann. Die Fixierung kann z.B. durch Verschrauben erfolgen, beispielsweise an den in Fig. 4 gezeigten Öffnungen am Rand der Endplatte 22. Zwischen dem umlaufenden Rand der Endplatte 22 und dem Gehäuse 12 kann eine (nicht gezeigte) umlaufende Dichtung vorgesehen sein, um den Wärmetauscher 20 mit dem Gehäuse 12 gasdicht, genauer gesagt vakuumdicht, zu verbinden. Die Dichtung ist bevorzugt zwischen der durchgehenden Öffnung 28 und den Öffnungen angeordnet, die am Rand der Endplatte 22 für die Verschraubung vorgesehen sind. An einer Stirnseite des Zufuhrgehäuses 12 ist eine Gaseintrittsöffnung 29 gebildet, durch die das Lasergas von dem Radialgebläse 11 in den Wärmetauscher 20 einströmt, wobei eine in Fig. 4 durch einen Pfeil angedeutete Strömungsrichtung 30 des Lasergases parallel zu den Endplatten 22, 23 verläuft.

Da die Wärmetauscherrohre 21 a, 21 b parallel ausgerichtet sind und unter einem rechten Winkel zu den Endplatten 22, 23 verlaufen, trifft das Lasergas im Wesentlichen senkrecht zur Rohrlängsrichtung auf diese auf. Wie in Fig. 3 zu erkennen ist, sind die Wärmetauscherrohre 21 a, 21 b in zueinander versetzten Reihen angeordnet, wobei in einer Reihe jeweils vier Wärmetauscherrohre 21 a und in einer benachbarten Reihe jeweils fünf Wärmetauscherrohre 21 b angeordnet sind. Die Wärmetauscherrohre 21 a, 21 b liegen hierbei so dicht nebeneinander, dass eine turbulente Gasströmung erzeugt wird. Auf diese Weise kann ein besonders effektiver Wärmeaustausch zwischen dem Lasergas und dem durch die Wärmetauscherrohre 21 a, 21 b strömenden Wasser erreicht werden, ohne dass hierbei ein zu großer Druckverlust des Lasergases auftritt. Der Austritt des Lasergases zum Laserresonator 2 erfolgt an einer in Fig. 4 nicht dargestellten Öffnung an der Unterseite des Zufuhrgehäuses 12.

Fig. 5 zeigt schließlich den Aufbau eines Wärmetauscherrohres 21a, bei dem es sich um ein Bimetallrohr handelt, welches ein Innenrohr 31 aus rostfreiem Stahl sowie eine Mehrzahl von Kühlrippen 32 aus Aluminium aufweist, die auf das Innenrohr 31 aufgewalzt sind, d.h. die Kühlrippen 32 sind an einem Außenrohr ausgebildet. Zum Aufwalzen wird über das Innenrohr 31 ein Außenrohr aus Aluminium geschoben, welches noch nicht mit Rippen versehen ist. Durch ineinander laufende Schneidwalzen werden aus dem glatten Außenrohr die Kühlrippen 32 geschnitten bzw. geformt. Die Verwendung eines Innenrohrs 31 aus rostfreiem Stahl verhindert eine Korrosion durch die Kühlflüssigkeit, während die Kühlrippen 32 aus Aluminium einen effizienten Wärmeaustausch gewährleisten.

Auf die oben beschriebene Weise kann ein Wärmetauscher 20 bereitgestellt werden, welcher strömungstechnisch optimiert ist sowie eine kompakte Bauform aufweist. Da sich einzelne Kühlkreisläufe abteilen lassen, indem Kühlmittelanschlüsse an ausgewählten Kühlkanälen zur Verteilung des Kühlmediums an den Endplatten angebracht werden, wird zudem ein modularer Aufbau realisiert, der sich einfach und schnell an die jeweiligen Erfordernisse beim Betrieb des Gaslasers 1 anpassen lässt.

## Patentansprüche

1. Gaslaser (1), umfassend:
ein Gebläse (11) zur Erzeugung eines Gasstroms eines Lasergases, sowie mindestens einen Wärmetauscher (20) mit einer Mehrzahl von Wärmetauscherrohren (21 a, 21 b),
wobei der Wärmetauscher (20) zwei Endplatten (22, 23) aufweist, an denen die Wärmetauscherrohre (21 a, 21 b) an ihren gegenüberliegenden Enden befestigt sind, wobei die Endplatten (22, 23) Öffnungen (24a, 24b) für die Zuführung eines Wärmetauscherfluids zu den Wärmetauscherrohren (21 a, 21 b) aufweisen und
wobei die Wärmetauscherrohre (21 a, 21 b) quer zur Strömungsrichtung (30) des Gasstroms des Lasergases verlaufen,
**dadurch gekennzeichnet,**
**dass** in den Endplatten (22, 23) Kanäle (25) zur Verbindung von mindestens zwei Öffnungen (24a, 24b) gebildet sind, die unterschiedlichen Wärmetauscherrohren (21 a, 21 b) zugeordnet sind, dass mindestens ein Kanal (25) zur Verbindung von genau zwei Wärmetauscherrohren (21 a, 21 b) ausgebildet ist, und
**dass** die Endplatten (22, 23) Abdeckungen (26) zum fluiddichten Verschließen der Kanäle (24a, 24b) aufweisen.

2. Gaslaser nach Anspruch 1, bei dem die Wärmetauscherrohre (21 a, 21 b) parallel zueinander ausgerichtet sind.

3. Gaslaser nach einem der vorhergehenden Ansprüche, bei dem die Wärmetauscherrohre (21 a, 21 b) in einer matrixförmigen Anordnung angeordnet sind.

4. Gaslaser nach Anspruch 3, bei dem Wärmetauscherrohre (21) benachbarter Reihen (21 a, 21 b) der matrixförmigen Anordnung versetzt zueinander angeordnet sind.

5. Gaslaser nach einem der vorhergehenden Ansprüche, bei dem die Wärmetauscherrohre (21 a, 21 b) ein Innenrohr (31) sowie eine Mehrzahl von Kühlrippen (32) aufweisen.

6. Gaslaser nach Anspruch 5, bei dem das Innenrohr (31) und die Kühlrippen (32) aus unterschiedlichen Materialien, insbesondere aus unterschiedlichen metallischen Materialien, hergestellt sind.

7. Gaslaser nach Anspruch 5 oder 6, bei dem die Kühlrippen (32) aus Aluminium hergestellt sind.

8. Gaslaser nach einem der Ansprüche 5 bis 7, bei dem das Innenrohr (31) aus rostfreiem Stahl hergestellt ist.

9. Gaslaser nach einem der vorhergehenden Ansprüche, weiter umfassend:
mindestens zwei Anschlussstutzen (27a, 27b) zur Zu- und Abführung eines Wärmetauscherfluids.

10. Gaslaser nach einem der vorhergehenden Ansprüche, weiter umfassend:
ein Gehäuse (12) mit einer insbesondere durchgehenden Öffnung (28) zur Aufnahme des Wärmetauschers (20).

11. Gaslaser nach Anspruch 10, bei dem eine der Endplatten (22) randseitig über die Öffnung (28) übersteht.

12. Gaslaser nach einem der vorhergehenden Ansprüche, bei dem mindestens eine Abdeckung (26) ausgebildet ist, die Verbindung zwischen den zu dem Kanal (25) gehörigen Öffnungen (24a, 24b) zu trennen.

13. Gaslaser nach einem der vorhergehenden Ansprüche, bei dem die Kanäle (25) durch ein materialabtragendes Verfahren oder durch ein umformendes Verfahren in den Endplatten (22, 23) gebildet sind.

## Claims

1. Gas laser (1), comprising:
a fan (11) for producing a gas flow of a laser gas and at least one heat exchanger (20) having a plurality of heat exchanger pipes (21a, 21b), wherein
the heat exchanger (20) has two end plates (22, 23) to which the heat exchanger pipes (21a, 21b) are secured at the opposing ends thereof, the end plates (22, 23) having openings (24a, 24b) for supplying a heat exchanger fluid to the heat exchanger pipes (21a, 21b) and the heat exchanger pipes (21a, 21b) extending transversely relative to the flow direction (30) of the gas flow of the laser gas,
**characterized**
**in that** there are formed in the end plates (22, 23) channels (25) for connecting at least two openings (24a, 24b) which are associated with different heat exchanger pipes (21a, 21b), in that at least one channel (25) is formed for connecting precisely two heat exchanger pipes (21a, 21b), and in that the end plates (22, 23) have covers (26) for closing the channels (24a, 24b) in a fluid-tight manner.

2. Gas laser according to claim 1, wherein the heat exchanger pipes (21a, 21b) are orientated parallel with each other.

3. Gas laser according to any one of the preceding claims, wherein the heat exchanger pipes (21a, 21b) are arranged in a matrix-like arrangement.

4. Gas laser according to claim 3, wherein heat exchanger pipes (21) of adjacent rows (21a, 21b) of the matrix-like arrangement are arranged so as to be offset relative to each other.

5. Gas laser according to any one of the preceding claims, wherein the heat exchanger pipes (21a, 21b) have an inner pipe (31) and a plurality of cooling ribs (32).

6. Gas laser according to claim 5, wherein the inner pipe (31) and the cooling ribs (32) are produced from different materials, in particular from different metal materials.

7. Gas laser according to claim 5 or claim 6, wherein the cooling ribs (32) are made of aluminium.

8. Gas laser according to any one of claims 5 to 7, wherein the inner pipe (31) is made of stainless steel.

9. Gas laser according to any one of the preceding claims, further comprising:
at least two connection pieces (27a, 27b) for supplying and discharging a heat exchanger fluid.

10. Gas laser according to any one of the preceding claims, further comprising: a housing (12) having an opening, in particular a through-opening (28), for receiving the heat exchanger (20).

11. Gas laser according to claim 10, wherein one of the end plates (22) protrudes at the edge side beyond the opening (28).

12. Gas laser according to any one of the preceding claims, wherein at least one cover (26) is configured to separate the connection between the at least two openings (24a, 24b) associated with the channel (25).

13. Gas laser according to any one of the preceding claims, wherein the channels (25) in the end plates (22, 23) are generated by a method involving material removal or by a method involving shaping.

## Revendications

1. Laser à gaz (1), comprenant:
un ventilateur (11) pour générer un flux gazeux d'un gaz laser et au moins un échangeur de chaleur (20) doté d'une pluralité de tubes échangeurs de chaleur (21a, 21b),
dans lequel l'échangeur de chaleur (20) présente deux plaques terminales (22, 23) auxquelles les tubes échangeurs de chaleur (21a, 21b) sont fixés par leurs extrémités opposées, les plaques terminales (22, 23) présentant des ouvertures (24a, 24b) pour l'amenée d'un fluide d'échange de chaleur aux tubes échangeurs de chaleur (21a, 21b) et les tubes échangeurs de chaleur (21a, 21b) s'étendent transversalement à la direction d'écoulement (30) du flux gazeux du gaz laser,
**caractérisé en ce**
**que** des canaux (25) servant à relier au moins deux ouvertures (24a, 24b) sont formés dans les plaques terminales (22, 23), lesquelles sont associés à des tubes échangeurs de chaleur (21a, 21b) différents, qu'au moins un canal (25) est réalisé pour relier exactement deux tubes échangeurs de chaleur (21a, 21b) et que les plaques terminales (22, 23) présentent des couvercles (26) pour fermer les canaux (24a, 24b) de manière étanche aux fluides.

2. Laser à gaz selon la revendication 1, dans lequel les tubes échangeurs de chaleur (21a, 21b) sont orientés parallèlement les uns aux autres.

3. Laser à gaz selon l'une des revendications précédentes, dans lequel les tubes échangeurs de chaleur (21a, 21b) sont disposés dans un arrangement matriciel.

4. Laser à gaz selon la revendication 3, dans lequel les tubes échangeurs de chaleur (21) de rangées (21a, 21b) adjacentes de l'arrangement matriciel sont décalés les uns par rapport aux autres.

5. Laser à gaz selon l'une des revendications précédentes, dans lequel les tubes échangeurs de chaleur (21 a, 21 b) présentent un tube intérieur (31) et une pluralité d'ailettes de refroidissement (32).

6. Laser à gaz selon la revendication 5, dans lequel le tube intérieur (31) et les ailettes de refroidissement (32) sont fabriqués dans des matériaux différents, en particulier dans des matériaux métalliques différents.

7. Laser à gaz selon la revendication 5 ou 6, dans lequel les ailettes de refroidissement (32) sont fabriquées en aluminium.

8. Laser à gaz selon l'une des revendications 5 à 7, dans lequel le tube intérieur (31) est fabriqué en acier inoxydable.

9. Laser à gaz selon l'une des revendications précédentes, comprenant en outre :
au moins deux manchons de raccordement (27a, 27b) pour l'amenée et l'évacuation d'un fluide d'échange de chaleur.

10. Laser à gaz selon l'une des revendications précédentes, comprenant en outre :
un boîtier (12) avec une ouverture (28) en particulier traversante pour la réception de l'échangeur de chaleur (20).

11. Laser à gaz selon la revendication 10, dans lequel une des plaques terminales (22) dépasse de l'ouverture (28) au niveau du bord.

12. Laser à gaz selon l'une des revendications précédentes, dans lequel au moins un couvercle (26) est réalisé pour séparer la liaison entre les ouvertures (24a, 24b) associées au canal (25).

13. Laser à gaz selon l'une des revendications précédentes, dans lequel les canaux (25) sont formés dans les plaques terminales (22, 23) par un procédé impliquant un enlèvement de matière ou par un procédé de formage.
